# EUROPEAN PATENT APPLICATION

(11) **EP 0 739 760 A1**
(43) Date of publication of application: **30.10.1996**
(21) Application number: 95106381.7
(22) Date of filing: 27.04.1995
(51) Int. Cl.: B60C 11/16, B60C 11/14

(54) **Vehicle tire, a slip preventing member used for vehicle tire, and method for preventing a slip of tire**

(71) Applicant: Tsuzuki Electric Corporation, Tokyo 141 (JP)
(72) Inventor: Tsuzuki, Yasuhiro, Minato-ku, Tokyo 108 (JP)
(74) Representative: Sajda, Wolf E., Dipl.-Phys.

(57) **Abstract**

The invention is directed to provide a winter tire (5) capable of obtaining an excellent running property on a snow stacked frozen road (R). In accordance with the invention, in a winter tire (5) having a number of slip preventing structures (1) in the contact surface (6) for engagement with the road surface (R), the slip preventing structure (1) is constructed by a slip preventing brush member (1) mounted in a cylindrical water sucking groove (7) formed to a predetermined depth towards the interior from the contact surface (6a) for engagement with the road surface (R), and a number of wire materials (3a) which are held within the water sucking groove (7).

## Description

### BACKGROUND OF THE INVENTION

### Technical Field

The present invention relates to a prevention of a slipping phenomenon of a tire produced on a road surface being wet by rain water or on a snow stacked frozen road, and particularly to a vehicle tire, a slip preventing member used for this vehicle tire, and a method for preventing a slip of tire in a vehicle capable of obtaining an excellent running property on a snow stacked frozen road.

### Prior Art

Most of accident produced to a vehicle on a cold snow stacked area is shared by a slipping accident. This is, a matter of course, that it is because a frictional resistance between a tire and road is reduced by a freezing of road surface or snow stack and the like whereby a braking and handling properties are remarkably decreased. Accordingly, in a cool snow stacked area, a promotion of excluding the snow on the road and expansion of facilities for that are intended, however, in a vehicle being severe in weather change, a maintaining of always good road surface condition at all area is practically impossible, and for prevention of the slipping accident, in addition to securing of the road condition, a slipping prevention countermeasure in a vehicle side is required.

As a slipping prevention countermeasure of the vehicle side in the snow stack time, it is said that a mounting of spike tire is most effective until now. However, since this spike tire is made by burying a number of metal made spike pins to tread of tire and inserting that metal made spike pins into the snow stacked surface or frozen road surface whereby obtaining a gripping force, there has been a problem that it cuts out the road surface on an ordinary dried road whereby producing a dust pollution. To this end, its use is prohibited except some area at present, instead of this, a stud-less tire without protruding the spike pins is noticed, and it has come to obtain a high using rate as a vehicle tire.

This stud-less tire is made to increase the gripping property of tire by a special compound, a tread pattern excellent in draining property, and a number of slits formed to the tread surface. For instance, a generally used stud-less tire at present uses a compound containing fine bubbles and forms a surface of the tread by cutting this, by doing as this, concave portion made of fine bubbles is formed to its surface, and thereby a strong gripping force is obtained by a sucking operation at said concave portion.

However, in the stud-less tire of current state as above, since the bubbles contained within the compound are formed in random, a distribution quantity of the concave portion appearing to the surface is apt to be un-uniform. To this end, considerable differences are appeared to the gripping force for each manufactured tire, and there is some case that almost no effect is exerted in a deteriorated article.

And, even if it is an article effectively functioning in the compound and tread pattern, a test result is reported which is greatly inferior than the spike tire in regard to a braking property and a handling property for a current stud-less tire. Accordingly, in a traffic view of the slip preventing measure and traffic quantity for the vehicle, it may be said that a situation is clearly retreated and aggravated relative to the spike tire using time. Of course, as for a phenomenon that the dust pollution around the road of spike tire using time is extremely severe and this is greatly reduced, it is thought that an applying of present legal regulation is reasonable, however an increasing of traffic accident and a decreasing of traffic quantity are also important problem, and at a cold snow stacked area, nowadays a countermeasure capable of solving the traffic problem and the dust pollution as above at once is earnestly desirable.

### SUMMARY OF THE INVENTION

The present invention, in order to solve such a problem as above, comprises a structure as follows.

Namely, the present invention is constructed such that, in a vehicle tire formed with a number of slip preventing structure to contacting surface to road surface, said slip preventing structure comprises a cylindrical water sucking groove formed with a predetermined depth toward inner direction from the contacting surface to the road surface and a slip preventing member made of multiplicity of wire members held within the water sucking groove, so that a negative pressure is produced between the water sucking groove and an interior space by expanding and deforming the water sucking groove at a time confronting with the road surface, and a water interposed between the road surface and the tread is sucked by the negative pressure and at the same time, by holding said sucked water among said multiplicity of wire members, a sucking-adhering force and freezing force are produced between the tread surface and the road surface whereby a gripping force against the road surface is produced, so that a water held among the wire members at a time the water sucking groove is moved to a position not confronting with the road surface is discharged to exterior by a restoring force of the water sucking groove and a centrifugal force produced by the rotation of tire.

And, in accordance with the vehicle tire according to the present invention, since an excellent water discharging property is included at the tread surface of the tire as described above, an excellent gripping force can be obtained at a road being wet by rain water as well as snow stacked road or frozen road, and therefore it is effective in all seasons.

### BRIEF DESCRIPTION OF THE DRAWINGS

FIG.1 is an exploded perspective view showing a slip preventing member in first embodiment of the present invention,
FIG.2 is diagrams showing the slip preventing member shown in FIG.1, in which
   (a) is a longitudinal cross sectional view, and
   (b) is a bottom view,
FIG.3 is a fragmentary perspective view of a vehicle tire in first embodiment of the present invention,
FIG.4 is a cross sectional view taken along X-X line of the tire shown in FIG.3,
FIG.5 is a magnified view of FIG.4,
FIG.6 is a magnified view showing a state at contacting time with the road surface and the slip preventing member shown in FIG.5,
FIG.7 is an exploded perspective view showing second embodiment in accordance with the present invention,
FIG.8 is a partial cross sectional view of the slip preventing member shown in FIG.7,
FIG.9 is a cross sectional view of the tire in accordance with third embodiment of the present invention,
FIG.10 is a partial cross sectional view showing fourth embodiment of the present invention,
FIG.11 is a cross sectional view showing an essential portion of fifth embodiment of the present invention,
FIG.12 is a table illustrating a braking test result of the vehicle tire in first embodiment of the present invention and a conventional stud-less tire, and

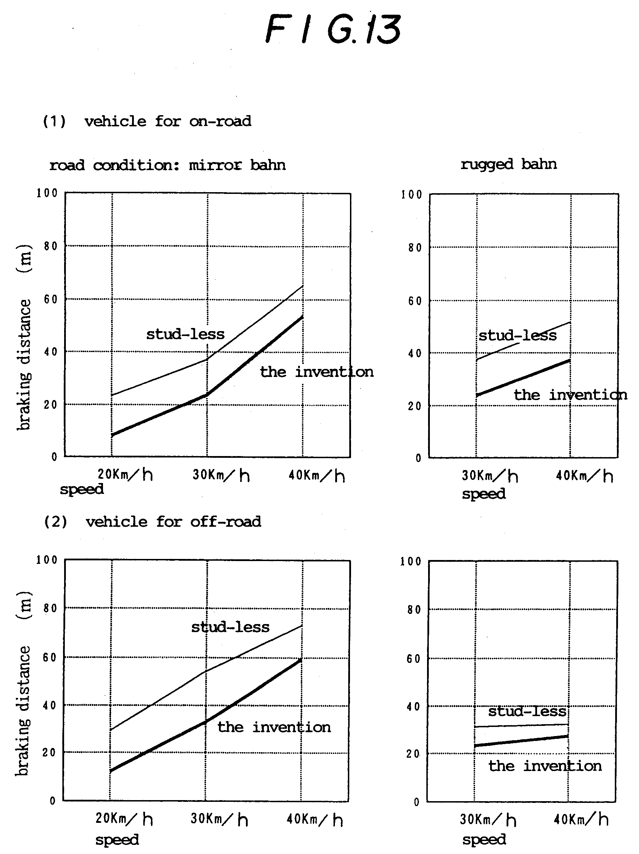

FIG.13 is a graph illustrating a result obtained by FIG.12.

### DETAILED DESCRIPTION OF PREFERRED EMBODIMENTS

Hereinafter, a preferred embodiment of the present invention will be described more in detail with reference to the accompanying drawings.

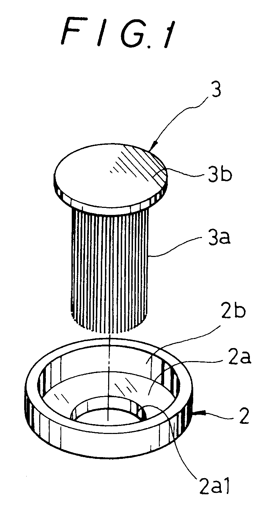

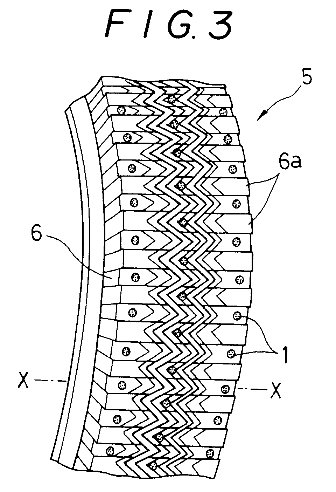

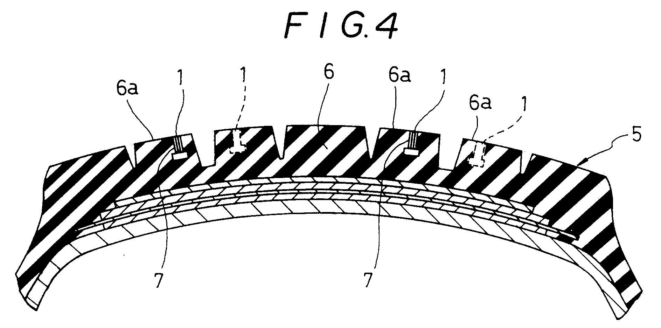

FIG.1 to FIG.6 are views showing a vehicle tire and a slip preventing member used for this in first embodiment of the present invention.

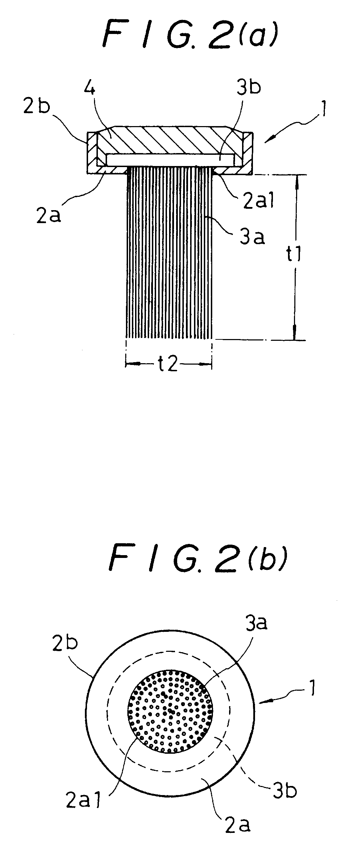

Firstly, on a basis of FIG.1 and FIG.2, the slip preventing member in this embodiment will be described. The slip preventing member 1 shown here includes a metal made annular portion 2 forming an opening at center and a main body 3 to be inserted to an opening 2a1 of the annular portion 2.

In this embodiment, the annular portion 2 is formed to make a container shape as a whole by providing a standing portion 2b at circumference of bottom portion 2a forming annular shape, and an iron is used for its raw material. Further, a raw material of the annular portion 2 may be used without limiting to the iron with other material, for instance, a carbon fiber, a ceramic and the like.

On the other hand, the main body 3 is made such that one end portions of the multiplicity of wire members 3a are adhered together and a circular plate like flange portion (fixing portion) 3b is formed at another end. And, in this embodiment, a thermoplastic resin mono-filament material is used for each wire material 3a, and the adhering of its respective wire material end each other is done by a heat welding adherence.

And, the flange portion 3b is molded to a circular plate shape by pressing the welding adhered portion by utilizing a thermoplasticity produced at heat welding time of its respective wire material 3a, and thereby it can be made in low cost. Of course, a flange portion 3b made of separate member may be fixed at one end portion of the bundled wire material 3a, and for a forming method of the flange portion 3b as well, it is not limited to the heat welding adherence especially as this embodiment. Further, a diameter of the fixing portion 3b may be established to a bigger diameter than the opening portion of the aforesaid annular portion 2, and it does not require necessarily high preciseness.

And, the main body 3 constructed as this is firmly fixed to the annular portion 2 by inserting and passing its respective wire material 3a to the opening portion 2a of the annular portion 2, by fixing the fixing portion 3b to circumference of the opening portion, and by hardening by filling the adhesive agent 4 into the annular portion 2 as shown in FIG.2 at said conditions.

And, the main body 3 in this embodiment is set to a size and hardness as follows.

That is, thickness of each wire material 3a of the main body 3 is made to 0.4 mm - 0.7 mm, and the number per one tire is made to 120 - 140. Further, a length t1 of the wire material 3a is set in double of thickness t2 bundled all wire materials 3a in circular shape. And, a hardness of the wire material 3a, in order to make not to hurt the road and obtain sufficient flexibility and restorability, of which Vickers hardness is set in a range of 100 - 180 kp/mm².

Further, the wire material 3a has a recovering property to an extent that it recovers from a state bent by 180 degrees to a straight state. And, in addition to hardness, bending property, and flexibility as described above, the wire material 3a used in this invention should be manufactured from a raw material having properties such as an anti-acid property, anti-alkali property, anti-weather property, and perfect water non-absorbing property; in particular, an article capable of maintaining these properties under temperature environment of -30 °C to +120 °C is desirable. As a raw material having these properties, it is desirable to take aromatic polyamide resin, polyethylene fluoride resin and the like as a raw material.

Next, the slip preventing tire in the first embodiment of the present invention using the slip preventing member 1 having an above construction will be described below.

This slip preventing tire 5 is made such that above described slip preventing members 1 are buried in multiplicity numbers (here about 120) to a radial tire, a bias tire as well as other well known tire. That is, in a tread portion 6 of the tire 5, it is fixed by forming a water sucking groove 7 to a contacting surface 6a (hereinafter called as tread surface) to the road surface, and by pressing and inserting the slip preventing member 1 to this water sucking groove 7.

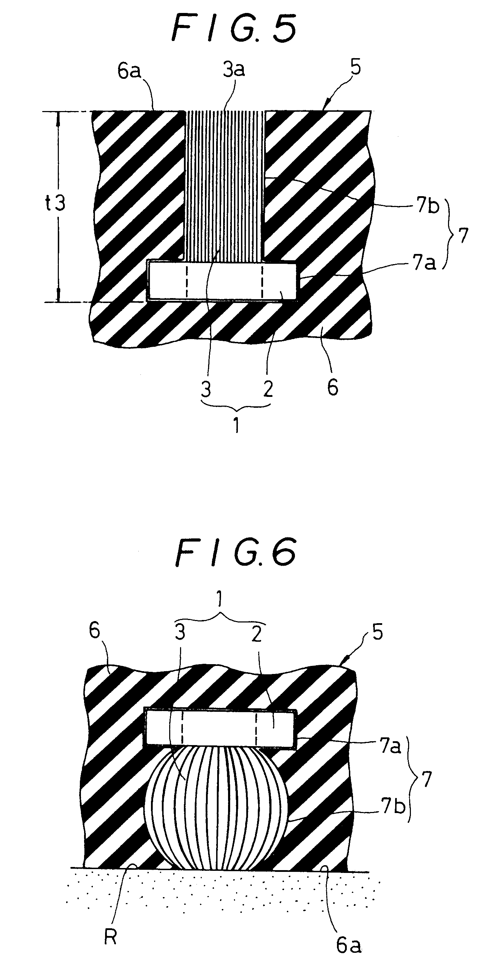

And, the water sucking groove 7 consists of an inserting portion 7a for inserting the annular portion 2 of the slip preventing member 1 (wedge portion), and a cylindrical portion 7b for surrounding around the main body 3a of the slip preventing member 1, and a depth t3 of whole is set as that a free end of each wire material 3a of the slip preventing member 1 is to be positioned at adjacent of the tread surface 6a. Here, the free end of each wire material 3a is set to be positioned on same surface as the tread surface 6a as shown in FIG.5, but if it is at adjacent of the tread surface 6a, it may be set at either a projected position against the tread surface 6a or a recessed position.

Further, the water sucking groove 7 is in a reduced state than before the pressing and inserting of the slip preventing member 1, but a pressing and inserting work of the slip preventing member 1 into this can readily done by using a well known striking tool used for striking to this by partially remaking.

In a vehicle tire constructed as above, at a time when the tread surface 6 is in a non-contacted state with the tread surface, the water sucking groove 7 forms a cylindrical shape as shown in FIG.5.

In contrast to this, in case of contacting to the road surface, the tread portion is transformed by a weight of the vehicle, and the water sucking groove 7 is also transformed as shown in FIG.6. That is, in this state, since the water sucking groove 7 of which middle portion of the cylindrical portion 7b is projected toward outer direction whereby transformed to a spherical shape, and an interior space of the water sucking groove 7 is increased relative to the state before the transformation, and a negative pressure is produced to the interior space. To this end, the tread surface 6a is sucked and adhered to the road surface R, and a strong gripping force can be obtained.

And, in case when a thin film shape water is interposed between the tread surface 6a and the road surface R, since that water is sucked into the water sucking groove 7 by the negative pressure produced within the water sucking groove 7, the tread surface 6a is directly contacted to the road surface R. And, since the water sucked into the water sucking groove 7 is held by a capillary phenomenon within a fine gap produced among respective wire material 3a, it is none that the water sucked into the water sucking groove 6a flowed down between the tread surface 6a and the road surface R, and the contacting state with the tread surface 6a to the road surface R is maintained, and a strong gripping force is obtained.

Particularly, in case of running on a frozen road or snow stacked road, since at a moment sucked the water of thin film state produced between the road surface R by the water sucking groove 7, a temperature drop is produced between the wire material 3a and the road surface R whereby the water sucking groove 7 at the tread surface 6a and its peripheral portion are frozen to the road surface, a stronger gripping force is obtained.

Further, in case when the water sucking groove 7 is transformed by a contact to the road surface R, since the wire material 3a of the slip preventing member 1 pricks to the frozen surface whereby a phenomenon scratching the road surface R is also produced, this makes a cause increasing the gripping force. However, since the hardness of each wire material of the slip preventing member 1 is 100 - 180 kg/mm², there is none to cut out a concrete road of 200 - 300 kg/mm² in surface hardness or 180 -200 kg/mm² of asphalt paved road, and there is none to produce the dust pollution.

Moreover, since the slip preventing member 1 contacting to the road surface R is transformed together with the water sucking groove 7 whereby absorbing a shock at a time contacting to the road R, there is none to be applied with excessive shock or contacting pressure only to the slip preventing member 1, and thereby a shock and contacting pressure of approximately same degree as the tread surface are applied. To this end, the slip preventing member 1, as the spike pin in the spike tire, there is none that only it is severely worn whereby worn as approximately same degree as the tread surface of the tire. Accordingly, a positional relation between the tread surface R and a front end portion of the slip preventing member 3a is always maintained in constant.

And, when the water sucking groove 7 is moved to a non-contacting position to the road surface R, the water held within the wire material 3a is discharged to exterior by a centrifugal force produced by a restoring force of the water sucking groove 7 and the rotation of tire. And, when it is released from the road surface R, the water sucking groove and the slip preventing member 1 are restored to a state shown in FIG.5.

Further, a braking test result of the vehicle tire in accordance with the present invention and a conventional stud-less tire is shown in table 12 and 13.

This test is measured with a braking distance and a braking time at two kinds of road surfaces on a so-celled mirror-bahn making a road surface to be a mirror surface state and a bahn being at a pressed snow state (rugged-bahn).

As is clear from the test result shown as well, it is understood that the vehicle tire in this embodiment is greatly curtailed in the braking distance and the braking time relative to the stud-less tire at either road surface. Particularly, in a low speed running (a running by 20 km/h) at a mirror-bahn being easiest to produce the slip accident, a remarkable improvement is seen in the braking distance. The running at the mirror-bahn is usual to be done at low speed, and when the vehicle tire in this embodiment is used, it is anticipated that an occurrence of slipping accident at city area can be greatly reduced, and its effect is great.

And, by this test, a result is obtained in which a noise produced by the tire at all running times is reduced relative to the conventional stud-less tire.

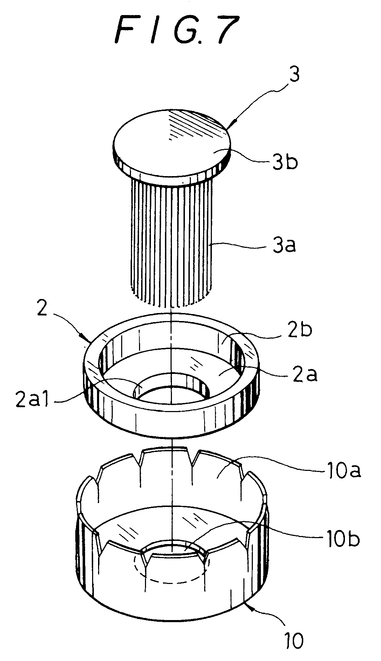

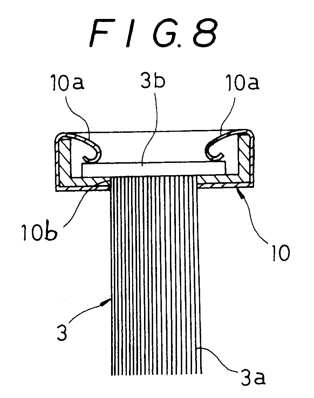

By the way, in above first embodiment, the main body 3 of the slip preventing member and the annular portion 2 are fixed by using an adhesive agent, but without using the adhesive agent, as shown in second embodiment of FIG.7 and FIG.8, it is possible to fix by using a pressing adhesive member 10.

The pressing adhesive member shown here forms a cylindrical shape capable of covering an external surface of the annular portion 2 and at the same time, a passing through hole 10b for successively passing through the annular member is formed at its bottom portion.

When fixing the main body 3 to the annular portion 2, each wire material 3a of the slip preventing member 1 is sequentially inserted into the annular portion 2 and into the pressing-adhering member 10 covering it. Then, the circumferential surface portion 10a protruding upwardly from the annular portion 2 is bent inwardly by a suitable tool, and the coupling portion 3b of the main body 3 is fixed to the annular portion 2 by pressing from above by means of its bent portion 10a as shown in Fig. 8. Thus, in this second embodiment, since a waiting time until an adhesive agent has hardened can be avoided, it has the advantage that it can be effectively produced.

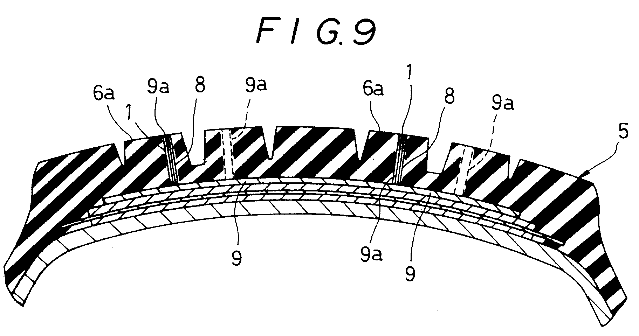

And, in case fixing the main body 3 and the annular portion 2, one end portion of the slip preventing member 1 is fixed within a thickness of the tread portion 6 in the tire 5, but it is also good to fix one end portion (annular portion 2) of the slip preventing member 1 to a portion of further inner diameter portion than the tread portion 6 of the tire 5. For instance, as shown in third embodiment of FIG.9, while forming a water sucking groove 8 passing through the tread portion 6, a wire material 9a projecting toward radial direction to a reinforcing belt (belt or breaker) polymerized to a carcass of the tire 5 is provided, and this may be inserted into said water sucking groove 8, and in this case also, same water sucking effect as above embodiment is obtained by the water sucking groove 8 and the wire material 9a, and thereby a strong gripping force can be obtained.

Further, the wire material 9a of this case is constructed by projecting a cord (nylon cord and the like) provided to the reinforcing band 9 toward a partially radial direction, and it is thought to plan an integralization with the reinforcing band 9a.

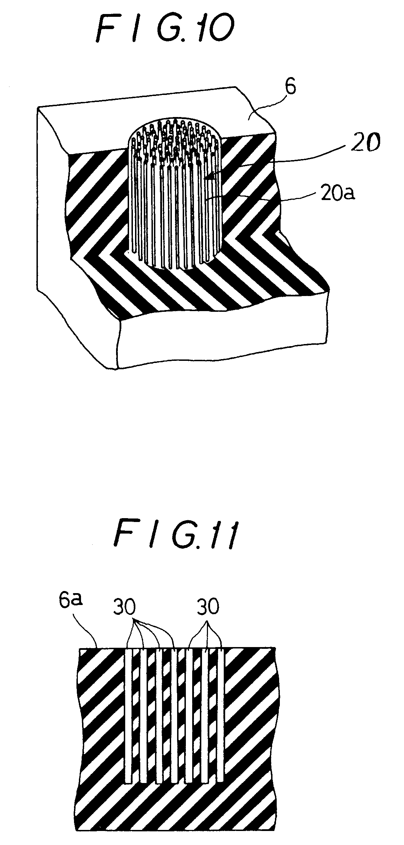

Further, as shown in fourth embodiment of FIG.10, a slip preventing portion 20 formed with a plurality of wire like portions 20a (wire material) becoming a free end at one end is integrally formed to the tread portion 6, and this may be a slip preventing structure.

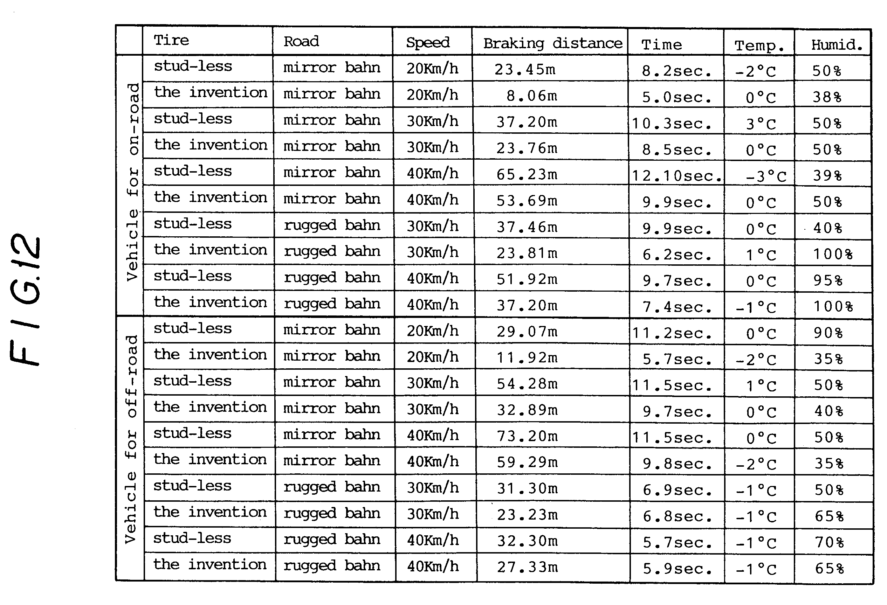

Other than this, as shown in the fifth embodiment of FIG.11, at a required place of the tread surface 6a of the tire, a plurality of fine gaps 30 of predetermined depth is collectively formed in a huge quantity in the radial direction from the tread surface 6a, and the function of sucking the water in a thin film shape existing between the road surface and the tread surface of the tire by the plurality of fine gap portions 30 is also possible. The present invention is not limited to the specific embodiment described above, and it is possible to make various modifications to the embodiments, which are for explanation purposes only, without leaving the scope of protection within the extent of technical idea described above.

Effect of the present invention will be described below.

As described above, in accordance with the present invention, the brakability and a handling property in case of running on a snow stacked road or a frozen road are same degree as conventional spike tire, and further excellent when comparing with the sud-less tire. And, a silentness is further excellent relative to the spike tire. Accordingly, since the present invention can greatly contribute particularly to an increase of traffic quantity in winter, to a solution of traffic delay, and to a decrease of the slipping accident and at the same time, there is none to cut out the road surface in case of running a dried road surface, and the dust pollution is not produced, and it is very useful thing from a point of the road protection and the environment protection. And, in accordance with the present invention, since an extremely good anhydousibility is included at the tread surface of the tire, a strong gripping force is obtained not only on the snow stacked road or frozen road but also on a road surface being wet by a rain water, and thereby excellent brakability and handling property is obtained in all seasons.

## Claims

1. In a vehicle tire (5) formed with a number of slip preventing structures having a contacting surface (6a) for engaging a road surface (R), wherein the vehicle tire (5) is characterized in that each slip preventing structure (1) comprises a brush member made of a plurality of wire materials (3a, 9a) buried into a tread portion (6) and extending outwardly in a radial direction from a region adjacent to the contacting surface (6a) of the tread portion (6) to the contacting surface (6a).

2. In a vehicle tire (5) formed with a number of slip preventing structures having a contacting surface (6a) for engaging a road (R), wherein the vehicle tire (5) is characterized in that each slip preventing structure comprises a cylindrical water sucking groove (7, 8) formed to a predetermined depth in the radial direction from the contacting surface (6a) to the interior of the tire (5) and a slip preventing member (1) made of a plurality of wire materials (3a, 9a) held within the respective water sucking groove (7, 8).

3. The vehicle tire according to claim 2,
characterized in that the water sucking groove (7, 8) is formed within the tread portion (6), wherein an end portion (3b) of the slip preventing member (1) is fixed to the bottom of the water sucking groove (7, 8).

4. The vehicle tire according to claim 2,
characterized in that the water sucking groove (8) is formed so that is passes through the tread portion (6), wherein a front end portion of each wire material (9a) of the slip preventing member (1) is fixed to a portion positioned to an inner diameter side rather than to the tread portion surface (6a).

5. The vehicle tire according to any of claims 1 to 3, characterized in that the slip preventing member (1) comprises:
- a main body (3) formed by piling and adhering the one end portions of a plurality of resin wire materials (3a) and by fixing a fixing portion (3b) to the other end portions of the wire materials (3a) so that the wire materials (3a) project from the fixing portion (3b), and
- an annular portion (2) having an opening (2a1) into which the main body (3) is inserted and wherein the fixing portion (3b) is mounted and coupled to the circumference of the opening portion (2a).

6. The vehicle tire according to claim 5,
characterized in that the annular portion (2) and the fixing portion (3b) are fixed to each other by an adhesive agent.

7. The vehicle tire according to claim 5,
characterized in that the annular portion (2) and the fixing portion (3b) are fixed to each other by a pressing and adhering material (10) clamping and joining them together.

8. A slip preventing member (1) for use in a vehicle tire (5) which comprises:
- a main body (3) formed of a fixing portion (3b) to which the end portions of a plurality of wire materials (3a) are adhered and fixed so that they project from the fixing portion (3b), and
- an annular portion (2) having an opening portion (2a1) through which are inserted all the wire materials (3a) of the main body (3) and coupling and fixing the fixing portion (3b) to the opening circumference (2a) of the annular portion (2).

9. The slip preventing member according to claim 8,
wherein the main body (3) includes a fixing portion (3b) formed by heat welding all the end portions of the plurality of resin made wire materials (3a) to each other and at the same time to the fixing portion (3b) so that they project therefrom in one direction.

10. The slip preventing member according to claim 9,
wherein the annular portion (2) and the fixing portion (3b) are fixed by an adhesive agent.

11. The slip preventing member according to claim 9,
wherein the annular portion (2) and the fixing portion (3b) are fixed by a pressing and adhering material (10) clamping and joining them to each other.

12. The slip preventing member according to any of claims 8 to 11,
wherein the wire material (3a) includes, in a temperature range of at least -30 °C to +120 °C, a good flexibility, a Vickers hardness of 100 to 180 kp/mm², properties such as a high recoverability for recovering to a straight state at a time when the wire material (3a) has been bent by 180 degrees from the straight state, an anti-acid property, an anti-alkali property, an anti-weather property, an extremely low hygroscopicity, and a perfect water non-absorbing property.

13. The slip preventing member according to any of claims 9 to 12,
wherein the wire material (3a) is made of thermoplastic resin mono-filament material, and the mono-filament material has a Vickers hardness of 100 to 180 kp/mm².

14. A method for preventing the slip of a tire (5) on a road (R) by producing a negative pressure in the inner spaces of water sucking grooves (7) by expanding and deforming the water sucking grooves (7) formed in the tread portion (6) of the tire (5) when it is in contact with the road (R), sucking water interposed between the tread surface (6a) and the road surface (R) by the negative pressure and, at the same time, holding the sucked water among a plurality of wire materials (3a) held within the water sucking groove (7) so that a gripping force of the tire (5) engaging the road surface (R) is generated by producing a sucking-and-adhering force and a freezing force between the tread surface (6a) and the road surface (R), and discharging the water held among the wire materials (3a) at a time when the water sucking groove (7) is moved toward an out of engagement position from the road (R) to the exterior by a restoring force of the water sucking groove (7) and a centrifugal force produced by the rotation of the wire (5).
